# EUROPÄISCHE PATENTANMELDUNG

(11) **EP 4 266 101 A1**
(43) Veröffentlichungstag der Anmeldung: **25.10.2023**
(21) Anmeldenummer: 23165797.4
(22) Anmeldetag: 31.03.2023
(51) Int. Cl.: G02B 6/44, H04Q 1/02

(54) **NETZVERTEILERSCHRANK**

(30) Priorität: 19.04.2022 DE 102022109405
(71) Anmelder: Kaiser GmbH & Co. KG, 58579 Schalksmühle (DE)
(72) Erfinder: Marowsky, Michel, 58509 Lüdenscheid (DE); Siebeking, Thomas, 58513 Lüdenscheid (DE); Langenohl, Benedikt, 58579 Schalksmühle (DE)
(74) Vertreter: Rentsch Partner AG

(57) **Zusammenfassung**

Die vorliegende Erfindung bezieht sich auf einen Netzverteilerschrank (1) für Glasfaserleitungen umfassend ein Gehäuse (2) mit einer Rückwand (3), einer Schrankdecke (4) und einer ersten und zweiten Seitenwand (5, 6), sowie einer der Rückwand (3) gegenüberliegenden Schranköffnung (9). Der Netzverteilerschrank umfasst weiter eine Schwenkplatte (8) mit mindestens einer an einer Innenseite (14) der Schwenkplatte (8) angebrachten Aufnahme (16) für mindestens eine Spleisskassette (17), wobei die Schwenkplatte (8) von einer ersten Position, in der die mindestens eine Aufnahme (16) im Wesentlichen innerhalb des Gehäuses (2) angeordnet ist, in eine zweite Position, in der die mindestens eine Aufnahme (16) in die vertikale Richtung oberhalb der Schrankdecke (4) angeordnet ist, schwenkbar ist.

## Beschreibung

Die vorliegende Erfindung bezieht sich auf einen Netzverteilerschrank für Glasfaserleitungen.

Aus dem Stand der Technik sind derartige Netzverteilerschränke bekannt. In diese werden in der Regel von den Anbietern kommende Glasfaserleitungen eingeführt, über Kassettensysteme abgelegt und mit abgehenden Glasfaserleitungen verbunden, die ihrerseits weiter zu den Verbrauchern geführt werden. Hierfür können die in den Netzverteilerschrank eingehenden Glasfaserleitungen (Anbieterleitungen) gespleisst und/oder gepatcht werden bevor diese den Netzverteilerschrank wieder als ausgehende Glasfaserleitungen (Verbraucherleitungen) mit ggf. übrig gebliebenen Anbieterleitungen verlassen.

Ein Beispiel eines derartigen Netzverteilerschranks offenbart die DE102012008923A1**.** Der Netzverteilerschrank umfasst ein Gehäuse, in dem Glasfaserleitungen von einem unteren Eingangsbereich zu Spleissstellen verlegbar sind, wobei das Gehäuse eine Rückwand, eine Oberwand, Seitenwände und eine zu öffnende Tür aufweist. Ferner weist der Netzverteilerschrank in dem Gehäuse zwischen dessen Rückwand und der Tür eine schwenkbare Wand auf, welche an den Seitenwänden des Gehäuses befestigt ist und seitlich ausschwenkbar ist. An der Vorderseite der schwenkbaren Wand befinden sich u. a. Spleisskassettenhalter mit Spleisskassetten, zu denen die Glasfaserleitungen verlegt werden.

Ein Monteur muss zum Verteilen der Anbieterleitungen auf die Verbraucher, die Anbieter- und Verbraucherleitungen in dem Netzverteilerschrank verlegen und diese an mindestens einer Verbindungsstelle verbinden, d.h. spleissen und/oder patchen. Diese Arbeit ist in der Regel aufwendig, wird von dem Monteur in der Hocke vor dem Netzverteilerschrank durchgeführt.

Eine Aufgabe der Erfindung besteht darin einen leicht benutzbaren und ergonomischen Netzverteilerschrank bereitzustellen.

Die Erfindung bezieht sich auf einen Netzverteilerschrank für Glasfaserleitungen. Der Netzverteilerschrank dient zum Aufteilen von Glasfaserleitungen, insbesondere zum Aufteilen von (Glasfaser-) Anbieterleitungen an individuelle Verbraucher. Hierzu werden Glasfaserleitungen (Anbieterleitungen) in den Netzverteilerschrank eingeführt, dort aufgeteilt und mit individuellen Verbraucherleitungen verbunden, welche wiederum mit ggf. restlichen, übrig gebliebenen Anbieterleitungen den Netzverteilerschrank wieder verlassen. Die jeweilige Verbindungsstelle(n) der Glasfaserleitungen, an welchen diese durch Spleissen und/oder Patchen miteinander verbunden wurden, liegt in der Regel in einer in dem Netzverteilerschrank angeordneten Spleisskassette. Hierzu kann die Spleisskassette Mittel zur Unterbringung von Glasfaserleitungen, insbesondere deren Reservelänge, und/oder Steckverbindern für Glasfaserleitungen aufweisen.

Der Netzverteilerschrank gemäss der Erfindung weist ein Gehäuse auf, welches eine Rückwand, eine Schrankdecke, eine erste Seitenwand, eine zweite Seitenwand, sowie eine der Rückwand gegenüberliegende Schranköffnung umfasst. Optional kann das Gehäuse weiter einen der Schrankdecke gegenüberliegenden Schrankboden umfassen. Der Netzverteilerschrank kann zudem eine Abdeckung aufweisen, welche dazu dient die Schranköffnung zu verschliessen. Die Abdeckung kann mindestens eine Schranktür umfassen und über ein oder mehrere Gelenke an dem Gehäuse angebracht sein. D.h. die Abdeckung kann mehrteilig ausgestaltet sein. Insbesondere bietet sich seine Teilung der Abdeckung in eine obere Abdeckung für einen oberen Gehäusebereich und einen untere Abdeckung für einen unteren Gehäusebereich an. Die obere Abdeckung kann die mindestens eine Schranktür aufweisen. Die erste Seitenwand und zweite Seitenwand erstrecken sich jeweils in eine vertikale Richtung. In einem aufgebauten Zustand des Netzverteilerschranks ist hierbei die vertikale Richtung parallel zur Richtung der Schwerkraft definiert. D.h. eine zur vertikalen Richtung senkrecht angeordnete horizontale Richtung ist parallel zum Boden definiert.

Das Gehäuse kann weiter mindestens eine Öffnung zum Einführen von Glasfaserleitungen in den Netzverteilerschrank (Anbieterleitungen) und/oder Ausführen von Glasfaserleitungen aus den Netzverteilerschrank (Verbraucherleitungen und ggf. restliche Anbieterleitungen) aufweisen. Die mindestens eine Öffnung ist mit Vorteil in einem unteren Gehäusebereich des Gehäuses angeordnet. Die Öffnung kann hierbei in der Rückwand und/oder der ersten Seitenwand und/oder der zweiten Seitenwand und/oder dem Schrankboden angeordnet sein. Mit Vorteil weist das Gehäuse jedoch in der ersten Seitenwand eine (Einführ-) Öffnung zum Einführen von Glasfaserleitungen und in der zweiten Seitenwand eine weitere dieser gegenüberliegende (Ausführ-) Öffnung zum Ausführen von Glasfaserleitungen auf.

Der Netzverteilerschrank umfasst weiter eine Schwenkplatte. Auf einer Innenseite der Schwenkplatte ist mindestens eine Aufnahme für eine (jeweilige) Spleisskassette angebracht. Erfindungsgemäss kann die Schwenkplatte von einer ersten Position, in der die mindestens eine Aufnahme im Wesentlichen innerhalb des Gehäuses angeordnet ist, in eine zweite Position, in der die mindestens eine Aufnahme in vertikaler Richtung oberhalb der Schrankdecke angeordnet ist, schwenkbar sein. Die Schwenkplatte erstreckt sich hierbei in eine Längsrichtung der Schwenkplatte von einem proximalen Ende zu einem distalen Ende. Das proximale Ende ist dabei dasjenige Ende, über welches die Schwenkplatte schwenkbar mit dem Gehäuse wirkverbunden ist. In der ersten Position der Schwenkplatte kann die Innenseite der Schwenkplatte zur Rückseite des Netzverteilerschranks hinweisen. In der zweiten Position der Schwenkplatte kann die Innenseite von der Schrankdecke des Netzverteilerschranks wegweisen. Mit Vorteil ist die mindestens eine Aufnahme ferner in der zweiten Position aus der vertikalen Richtung betrachtet ebenfalls innerhalb einer Kontur der Schrankdecke angeordnet. Weiterhin bietet es sich je nach Ausführung an, dass die Schwenkplatte und die mindestens eine Aufnahme in der ersten Position innerhalb des Gehäuses, insbesondere des oberen Gehäusebereichs, angeordnet ist.

Je nach Anwendung kann die Schwenkplatte um eine horizontale Schwenkachse schwenkbar sein. Die horizontale Schwenkachse kann im Bereich einer Kante der Schrankdecke angeordnet sein, welche die Schranköffnung bereichsweise begrenzt. Mit Vorteil verläuft die Schwenkachse durch ein Gelenk. Das Gelenk kann also die Schwenkplatte mit der Schrankdecke wirkverbinden. Weiterhin kann das Gelenk ein entfernbares Element, wie einen Stift, umfassen, sodass durch Entfernen des Elements die Wirkverbindung zwischen der Schwenkplatte und der Schrankdecke aufgehoben werden kann. Auf diese Weise kann die Schwenkplatte gänzlich von dem Gehäuse des Netzverteilerschranks gelöst werden, wenn dies nötig sein sollte.

Ebenfalls denkbar sind Anwendungen mit mehr als einer Schwenkachse. Beispielsweise kann die Schwenkplatte über einen Schwenkarm mit dem Gehäuse wirkverbunden sein. Der Schwenkarm ist vorteilhafterweise an einer Gehäuseinnenseite des Gehäuses befestigt. Der Schwenkarm kann mehrere Gelenke und/oder Schwenkachsen aufweisen. Zudem kann der Schwenkarm mindestens ein Feststellmittel zum Fixieren von einem oder mehreren Gelenken aufweisen. Ein Schwenkarm hat den Vorteil, dass eine individuellere Einstellung der zweiten Position der Schwenkplatte ermöglicht wird. In der ersten Position der Schwenkplatte ist vorteilhafterweise ebenfalls der Schwenkarm vollständig innerhalb des Gehäuses angeordnet.

Je nach Ausgestaltung kann der Netzverteilerschrank eine Fixierungsstruktur für die Schwenkplatte in der ersten Position umfassen, in der die mindestens eine Aufnahme im Wesentlichen innerhalb des Gehäuses angeordnet ist. Die Fixierungsstruktur schützt die eingeführten Glasfaserleitungen vor Beschädigungen, welche im Gehäuse, insbesondere zwischen der Schwenkplatte in der ersten Position und der Rückseite des Gehäuses, angeordnet sind. Die Fixierungsstruktur kann ein erstes Fixierungselement angeordnet an der Schwenkplatte und ein zweites Fixierungselement angeordnet am Gehäuse, insbesondere der ersten und/oder zweiten Seitenwand, umfassen, welche derart zusammenwirken, dass die Schwenkplatte in der ersten Position in einer definierten Lage positioniert ist. In der definierten Lage erstreckt sich die Längsrichtung der Schwenkplatte mit Vorteil parallel zur vertikalen Richtung. Die Fixierungsstruktur kann zum Beispiel ein magnetischer Anschlag, eine Rastzunge, eine Feststellraste oder ähnliches umfassen, respektive das erste und/oder zweite Fixierungselement kann zum Beispiel ein magnetischer Anschlag, eine Rastzunge, eine Feststellraste oder ähnliches sein.

In der Regel sind in dem Netzverteilerschrank mehr als eine Aufnahme, respektive mehr als eine Spleisskassette, angeordnet. Die mehreren Aufnahmen können hierbei matrizenartig an der Innenseite der Schwenkplatte angeordnet sein. Beispielsweise kann sich eine Reihe von mehreren Aufnahmen in Längsrichtung der Schwenkplatte erstrecken. Vorteilhafterweise erstrecken sich jedoch gleich zwei oder mehrere (in Querrichtung der Schwenkplatte nebeneinander angeordnete) Reihen von Aufnahmen entlang der Innenseite der Schwenkplatte. Die jeweilige Aufnahme für eine Spleisskassette kann eine Vertiefung zur bereichsweisen Aufnahme der jeweiligen Spleisskassette umfassen. Die Vertiefung erstreckt sich mit Vorteil in die Querrichtung der jeweiligen Schwenkplatte. Weiterhin umfasst die Aufnahme vorteilhafterweise mindestens ein Rastelement zum rastenden Verbinden mit der jeweiligen Spleisskassette. Mehrere Aufnahmen können auch in einer Aufnahmestruktur zusammengefasst sein.

Je nach Anwendung kann die mindestens eine Aufnahme weiter derart auslegt sein, dass eine in dieser aufgenommene Spleisskassette von einer ersten Stellung in einer zweite Stellung (um eine Kippachse) kippbar ist. In der ersten Stellung ist die in der jeweiligen Aufnahme aufgenommene Spliesskassette zum distalen Ende der Schwenkplatte hingeneigt, während die Spliesskassette in der zweiten Stellung zum proximalen Ende der Schwenkplatte hingeneigt ist. Die (jeweilige) Kippachse der mindestens einen Aufnahme liegt mit Vorteil parallel zur Schwenkachse. Die Kippachse liegt weiterhin mit Vorteil nahe der Innenseite der Schwenkplatte. Durch die Kippbarkeit der jeweiligen Spleisskassetten kann ein Monteur somit durch die verschiedenen Spleisskassetten «blättern». Dies vereinfacht die Arbeit des Monteurs. Die Spleisskassette(n) können je nach Ausführung zum Netzverteilerschrank gehören oder erst später in diesen eingebaut werden. Mit Vorteil ist die erste und/oder die zweite Stellung der mindestens einen Aufnahme in der zweiten Position der Schwenkplatte eigenstabil. Mit eigenstabil ist gemeint, dass ohne äussere Krafteinwirkung (z.B. durch den Monteur) die Spleisskassette (unter Wirkung der Schwerkraft) in der jeweiligen Stellung verweilt. Hierzu bietet es sich an, dass wenn A einem Winkel zwischen der in der mindestens einen Aufnahme in der ersten Stellung anordnenbaren Spleisskassette und der Schwenkplatte entspricht und B einem Winkel zwischen der Schwenkplatte und der Schrankdecke in der zweiten Position entspricht, der Zusammenhang A < 90° - B gilt. Gute Stabilität und Ergonomität werden erzeugt, wenn der Winkel A zwischen 40° - 70° liegt. Eine gute Ergonomität ist z.B. dadurch gegeben, dass der Monteur sich nicht in das Gehäuse bücken muss, sondern bequem im Stehen (oder im Sitzen - je nach Höhe des Schrankes) von oben und vor dem Netzverteilerschrank arbeiten kann.

In Längsrichtung der Schwenkplatte kann vor und/oder hinter der mindestens einen Aufnahme (oder der Reihe von Aufnahmen oder der Aufnahmestruktur) ein Anschlagelement für die Spliesskassette(n) angebracht sein. Mit Vorteil ist in Längsrichtung vor der mindestens einen Aufnahme (d.h. im Bereich des proximalen Endes der Schwenkplatte) ein vorderes Anschlagelement und/oder hinter der mindestens einen Aufnahme (d.h. im Bereich des distalen Endes des Schwenkplatte) ein hinteres Anschlagelement angeordnet. Das vordere Anschlagelement positioniert die jeweiligen Spleisskassette(n) in der zweiten Stellung, während das hintere Anschlagelement die jeweiligen Spleisskassette(n) in der ersten Stellung positioniert. Das hintere Anschlagelement kann somit den Winkel A der Spleisskassette in der ersten Stellung zur Innenseite der Schwenkplatte, bzw. das vordere Anschlagelement den Winkel der Spleisskassette in der zweiten Stellung zur Innenseite der Schwenkplatte, definieren.

Für eine reproduzierbare zweite Position der Schwenkplatte kann zwischen einer Aussenseite der Schwenkplatte und einer Gehäuseaussenseite des Gehäuses eine Abstützstruktur zum (reproduzierbaren) Abstützen der Schwenkplatte in der zweiten Position angeordnet sein. Auch kann die Abstützstruktur mehrere alternative zweite Positionen bereitstellen. Die Abstützstruktur kann einen Griff und optional eine Halterung für den Griff umfassen. Beispielsweise kann der Griff auf der Aussenseite der Schwenkplatte angeordnet sein. Die optionale Halterung kann auf der Gehäuseaussenseite angeordnet sein, sodass der Griff in dieser positioniert werden kann. Die Abstützstruktur kann ebenfalls mehrere Halterungen aufweisen, sodass alternative zweite Positionen bereitgestellt werden, respektive der Winkel A, je nach Aufgabe des Monteurs veränderbar ist.

Je nach Ausführung kann der Netzverteilerschrank ein Mischelement (auch Mischer genannt) umfassen. Dieser dient dazu Glasfaserleitungen aus einer Reihe von Aufnahmen mit Glasfaserleitungen aus einer anderen Reihe von Aufnahmen zu verbinden. Das Mischelement kann ebenfalls auf der Innenseite der Schwenkplatte angeordnet sein. Mit Vorteil ist pro Reihe an Aufnahmen ein Mischelement vorhanden. Dieses kann beispielsweise an dem Ende der Reihe von Aufnahmen angeordnet sein, welches zum proximalen Ende der Schwenkplatte zeigt.

Weiterhin kann am proximalen Ende und auf der Innenseite der Schwenkplatte mindestens ein Zugentlastungselement angeordnet sein. Das Zugentlastungselement dient dazu die Glasfaserleitungen, insbesondere in der zweiten Position der Schwenkplatte und/oder beim Schwenken der Schwenkplatte, von Zugkräften zu entlasten. Mit Vorteil ist das Zugentlastungselement hierzu neben dem Gelenk der Schwenkplatte angeordnet. Das Zugentlastungelement kann z.B. zwischen dem Mischelement und dem Gelenk angeordnet sein.

Der Netzverteilerschrank kann in einen oberen und einen unteren Gehäusebereich aufgeteilt werden. Der untere Gehäusebereich kann dazu dienen zumindest bereichsweise in der Erde versenkt zu werden. Äquivalent kann der obere Gehäusebereich dazu dienen obererdig zu sein. Die Öffnung in den Netzverteilerschrank kann im unteren Gehäusebereich angeordnet sein.

Je nach Ausführung kann in einem Innenraum des Gehäuses und in dem oberen Gehäusebereich mehrere Halteelemente zum Aufnahmen von Glasfaserleitungen angeordnet sein. Die mehreren Halteelemente sind mit Vorteil entlang der Rückwand angeordnet. Beispielsweise können diese entlang einer ringförmigen Kontur angeordnet sein. Ebenfalls denkbar ist es, dass mindestens eins der mehreren Halteelemente derart verschiebbar angeordnet ist, dass der Umfang um die ringförmige Kontur variabel ist. Hierzu kann mindestens eins der mehreren Halteelemente in mindestens eine erste und/oder zweite Richtung verschiebbar sein. Die erste Richtung kann in die horizontale Richtung zeigen und/oder die zweite Richtung kann in die vertikale Richtung zeigen.

Je nach Ausführung kann zwischen dem oberen und dem unteren Gehäusebereich eine Rohrbefestigungsplatte angeordnet sein. Die Rohrbefestigungsplatte weist hierzu eine Vielzahl von Einführöffnungen und eine Vielzahl von Ausführöffnungen auf. Die Einführöffnungen dienen zum Einführen von Glasfaserleitungen, insbesondere der Anbieterleitungen, in den oberen Gehäusebereich. Die Ausführöffnungen dienen zum Ausführen von Glasfaserleitungen, insbesondere Abnehmerleitungen, aus den oberen Gehäusebereich. Die Glasfaserleitungen, welche rein oder rausgeführt werden, werden hierbei in der Regel in Mikrorohren geführt. Die Ausführöffnungen weisen daher mit Vorteil Mittel zum Halten von Mikrorohren auf.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine Variante eines Netzverteilerschranks gemäss der Erfindung in einer perspektivischen Ansicht mit der Schwenkplatte in der zweiten Position;
- Fig. 2: Der Netzverteilerschrank gemäss Figur 1 mit der Schwenkplatte in der zweiten Position in einer Ansicht von vorne;
- Fig. 3: Der Netzverteilerschrank gemäss Figur 2 in einer geschnittenen Detailansicht A-A;
- Fig. 4: Der Netzverteilerschrank gemäss Figur 1 in einer perspektivischen Ansicht mit der Schwenkplatte in der ersten Position;
- Fig. 5: Eine schematische Ansicht der Schwenkplatte in der zweiten Position.

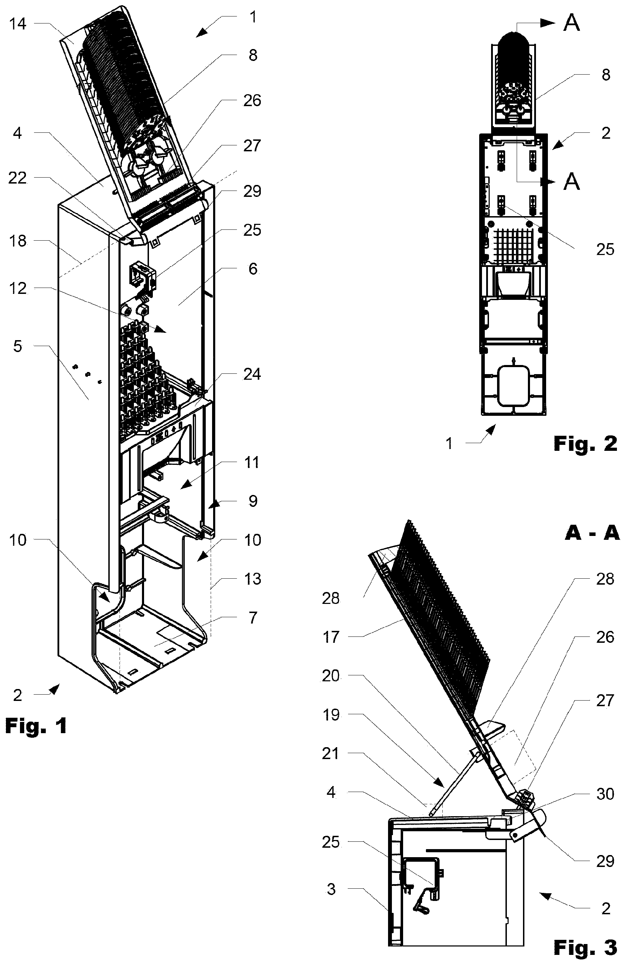

**Figur 1** bis **Figur 4** zeigen einen Netzverteilerschrank 1 gemäss der Erfindung mit einem Gehäuse 2, welches eine Rückwand 3, eine Schrankdecke 4, eine erste Seitenwand 5, eine zweite Seitenwand 6, sowie eine der Rückwand 3 gegenüberliegenden Schranköffnung 9 umfasst. Hierbei erstrecken sich die erste und zweite Seitenwand 5, 6 jeweils in eine vertikale Richtung (z - Richtung). Optional kann das Gehäuse 2 weiter einen der Schrankdecke 4 gegenüberliegenden Schrankboden 7 umfassen. Zur besseren Einsehbarkeit in den Netzverteilerschrank 1 ist eine Abdeckung 13, welche dazu dient die Schranköffnung 9 zu verschliessen, lediglich schematisch eingezeichnet. Der Netzverteilerschrank 1 ist in einen oberen und einen unteren Gehäusebereich 12, 11 aufgeteilt. Zwischen dem unteren und dem oberen Gehäusebereich 11, 12 ist eine Rohrbefestigungsplatte 24 angeordnet. In dem unteren Gehäusebereich 11 sind zwei gegenüberliegende Öffnungen 10 zum Einführen in den Netzverteilerschrank 1 und/oder Ausführen von Glasfaserleitungen aus dem Netzverteilerschrank 1 angeordnet. Der Netzverteilerschrank 1 weist weiter eine Schwenkplatte 8 mit mindestens einer an einer Innenseite 14 der Schwenkplatte 8 angebrachten Aufnahme 16 für mindestens eine Spleisskassette 17 auf. Mit Vorteil sind jedoch, wie gezeigt, mehrere Aufnahmen 16 für mehrere Spleisskassetten 17 vorhanden.

In dem oberen Gehäusebereich 12 sind zudem mehrere Halteelemente 25 zur Aufnahme von Glasfaserleitungen erkennbar, welche an der Rückwand 3 angeordnet sind (vgl. **Figur 2**). Die mehreren Halteelemente 25 sind mit Vorteil entlang einer ringförmigen Kontur angeordnet und derart verschiebbar, dass der Umfang um die ringförmige Kontur variabel ist. So können die Glasfaserleitungen um die Halteelemente 25 und entlang der ringförmigen Kontur gewickelt werden und dann die Halteelemente 25 derart verschoben werden, dass die Glasfaserleitungen unverlierbar befestigt werden.

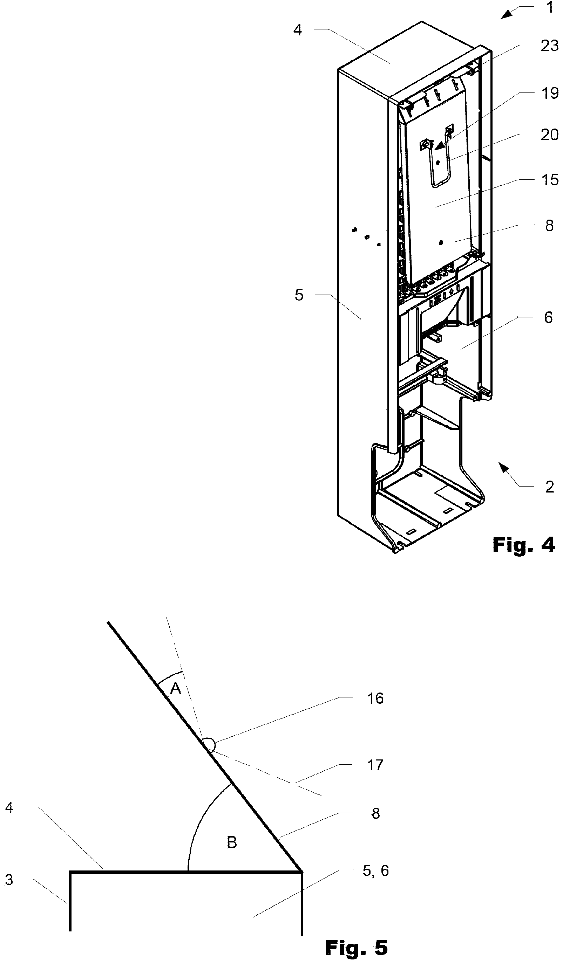

Gemäss der Erfindung ist die Schwenkplatte 8 von einer ersten Position in eine zweite Position schwenkbar. In **Figur 4** ist die Schwenkplatte 8 in der ersten Position gezeigt, in der die mindestens eine Aufnahme 16 im Wesentlichen innerhalb des Gehäuses 2 angeordnet ist. Mit Vorteil ist jedoch, wie ebenfalls dargestellt, die gesamte Schwenkplatte 8 in der ersten Position innerhalb des Gehäuses 2, insbesondere des oberen Gehäusebereichs 11, angeordnet. Eine Fixierungsstruktur 29, 30 sorgt für eine definierte Lage der Schwenkplatte 8 in der ersten Position, sodass durch die Rohrbefestigungsplatte 24 in den oberen Gehäusebereich 12 eintretenden Glasfaserleitungen nicht durch die Schwenkplatte 8 geknickt werden. In der definierten Lage der Schwenkplatte 8 in der ersten Position zeigt eine Längsrichtung der Schwenkplatte 8 mit Vorteil in die vertikale Richtung. Die Fixierungsstruktur umfasst ein erstes Fixierungselement 29 angeordnet an der Schwenkplatte 8 und ein zweites Fixierungselement 30 angeordnet an der ersten und/oder zweiten Seitenwand 5, 6, welche in der ersten Position miteinander in Wirkverbindung stehen.

In **Figur 1** bis **Figur 3** ist die Schwenkplatte 8 in der zweiten Position gezeigt, in der die mindestens eine Aufnahme 16 in die vertikale Richtung oberhalb der Schrankdecke 4 angeordnet ist. Mit Vorteil ist jedoch die mindestens eine Aufnahme 16 in der zweiten Position aus der vertikalen Richtung betrachtet ebenfalls innerhalb einer Kontur der Schrankdecke 4 angeordnet. Die Schwenkplatte 8 ist hierzu um eine horizontale Schwenkachse 18 und mit Hilfe eines Gelenks 22 schwenkbar, welches zwischen der Schrankdecke 4 und einer Schwenkplatte 8 angeordnet ist. Das Gelenk 22 kann einen entfernbaren Stift 23 umfassen, sodass durch Entfernen des Stifts 23 die Wirkverbindung zwischen der Schwenkplatte 8 und der Schrankdecke 4 aufgehoben werden kann. Auf diese Weise kann die Schwenkplatte 8 gänzlich von dem Gehäuse 2 des Netzverteilerschranks 1 gelöst werden, wenn dies nötig sein sollte.

In **Figur 3** ist zu erkennen, dass in der zweiten Position zwischen einer Aussenseite 15 der Schwenkplatte 8 und einer Gehäuseaussenseite ein Abstützstruktur 19 zum Abstützen der Schwenkplatte 8 angeordnet ist. Diese umfasst einen Griff 20, der an einer Aussenseite 15 der Schwenkplatte 8 angeordnet ist. Je nach Ausgestaltung kann der Griff von einer Halterung 21 angeordnet auf der Gehäuseaussenseite an der Schrankdeck 4 temporär positioniert werden.

Die Schwenkplatte 8 erstreckt sich in die Längsrichtung der Schwenkplatte 8 von einem proximalen Ende zu einem distalen Ende. Das proximale Ende ist hierbei dasjenige Ende über welches die Schwenkplatte 8 schwenkbar am Gehäuse 2 wirkverbunden ist. Auf der Innenseite 14 der Schwenkplatte 8 sind in Längsrichtung mehrere Aufnahmen 16 für je eine Spleisskassette 17 in einer Reihe angeordnet. Die in der jeweiligen Aufnahme 16 aufgenommene Spleisskassette 17 kann hierbei von einer ersten Stellung in eine zweite Stellung kippbar sein. In **Figur 3** sind die Spleisskassetten 17 in der ersten Stellung sichtbar. Ebenfalls erkennbar ist ein vor der Reihe der Aufnahmen 16 angeordnetes (d.h. im Bereich des proximalen Endes des Schwenkplatte 8) vorderes Anschlagelement 28 und ein hinter der Reihe angeordnetes hinteres Anschlagelement 28, welche die Spleisskassetten17 in der ersten Stellung, respektive zweiten Stellung positionieren. Im Bereich des proximalen Endes des Schwenkplatte 8 ist weiterhin ein Mischelement 26 und eine Zugentlastung 27 angeordnet, wie oben beschrieben.

In **Figur 5** ist eine schematische Ansicht der Schwenkplatte 8 in der zweiten Position gezeigt. In der hier schematisch dargestellten Variante der Erfindung sind die Spleisskassetten 17 in der ersten als auch in der zweiten Stellung eigenstabil. Dies wird durch das richtige Einstellen der jeweiligen Winkel erreicht: Wenn A einem Winkel zwischen der in der Aufnahme 16 in der ersten Stellung anordnenbaren Spleisskassette 17 und der Schwenkplatte 8 entspricht und B einem Winkel zwischen der Schwenkplatte 8 und der Schrankdecke 4 in der zweiten Position entspricht sollte mit Vorteil A < 90° - B gelten. Für eine gute Arbeitshaltung des Monteurs bietet sich zudem ein Winkel von A = 40° bis 70 ° an.

### LISTE DER BEZUGSZEICHEN

| | | | |
|---|---|---|---|
| 1 | Netzverteilerschrank | 16 | Aufnahme |
| 2 | Gehäuse | 17 | Spleisskassette |
| 3 | Rückwand | 18 | Schwenkachse |
| 4 | Schrankdecke | 19 | Abstützstruktur |
| 5 | Erste Seitenwand | 20 | Griff |
| 6 | Zweite Seitenwand | 21 | Halterung |
| 7 | Schrankboden | 22 | Gelenk |
| 8 | Schwenkplatte | 23 | Stift |
| 9 | Schranköffnung | 24 | Rohrbefestigungsplatte |
| 10 | Öffnung | 25 | Halteelemente |
| 11 | Unterer Gehäusebereich | 26 | Mischelement |
| 12 | Oberer Gehäusebereich | 27 | Zugentlastung |
| 13 | Abdeckung | 28 | Anschlagelement |
| 14 | Innenseite | 29 | Erstes Fixierungselement |
| 15 | Aussenseite | 30 | Zweites Fixierungselement |

## Patentansprüche

1. Netzverteilerschrank (1) für Glasfaserleitungen umfassend
a. ein Gehäuse (2) mit einer Rückwand (3), einer Schrankdecke (4) und einer sich in eine vertikale Richtung erstreckenden ersten und zweiten Seitenwand (5, 6), sowie einer der Rückwand (3) gegenüberliegende Schranköffnung (9); und
b. eine Schwenkplatte (8) mit mindestens einer an einer Innenseite (14) der Schwenkplatte (8) angebrachten Aufnahme (16) für mindestens eine Spleisskassette (17); wobei
c. die Schwenkplatte (8) von einer ersten Position, in der die mindestens eine Aufnahme (16) im Wesentlichen innerhalb des Gehäuses (2) angeordnet ist, in eine zweite Position, in der die mindestens eine Aufnahme (16) in die vertikale Richtung oberhalb der Schrankdecke (4) angeordnet ist, schwenkbar ist.

2. Netzverteilerschrank (1) gemäss Patentanspruch 1, **dadurch gekennzeichnet, dass** die Schwenkplatte (8) um eine horizontale Schwenkachse (18) schwenkbar ist.

3. Netzverteilerschrank (1) gemäss einem der vorangehenden Patentansprüche, **dadurch gekennzeichnet, dass** die mindestens eine Aufnahme (16) derart auslegt ist, dass eine in dieser aufgenommene Spleisskassette (17) von einer ersten Stellung in eine zweite Stellung um eine Kippachse kippbar ist.

4. Netzverteilerschrank (1) gemäss Patentanspruch 2 und 3, **dadurch gekennzeichnet, dass** die Kippachse und die Schwenkachse (18) parallel zueinander liegen.

5. Netzverteilerschrank (1) gemäss Patentanspruch 3 oder 4, **dadurch gekennzeichnet, dass** in der zweiten Position der Schwenkplatte (8) die erste und die zweite Stellung der mindestens einen Aufnahme (16) eigenstabil sind.

6. Netzverteilerschrank (1) gemäss einem der Patentansprüche 3 bis 5, **dadurch gekennzeichnet, dass**
a. A einem Winkel zwischen der in der Aufnahme (16) in der ersten Stellung anordnenbaren Speisskassette (17) und der Schwenkplatte (8) entspricht; und
b. B einem Winkel zwischen der Schwenkplatte (8) und der Schrankdecke (4) in der zweiten Position entspricht; und
c. A < 90° - B gilt.

7. Netzverteilerschrank (1) gemäss Patentanspruch 6, **dadurch gekennzeichnet, dass** der Winkel A zwischen 20° - 70 ° liegt.

8. Netzverteilerschrank (1) gemäss einem der vorangehenden Patentansprüche, **dadurch gekennzeichnet, dass** in der zweiten Position zwischen einer Aussenseite (15) der Schwenkplatte (8) und einer Gehäuseaussenseite ein Abstützstruktur (19) zum Abstützen der Schwenkplatte (8) angeordnet ist.

9. Netzverteilerschrank (1) gemäss Patentanspruch 8, **dadurch gekennzeichnet, dass** die Abstützstruktur (19) einen Griff (20) angeordnet an einer Aussenseite (15) der Schwenkplatte (8) umfasst.

10. Netzverteilerschrank (1) gemäss einem der vorangehenden Patentansprüche, **dadurch gekennzeichnet, dass** die Schwenkplatte (8) über ein Gelenk (22) mit der Schrankdecke (4) wirkverbunden ist.

11. Netzverteilerschrank (1) gemäss Patentanspruch 10, **dadurch gekennzeichnet, dass** das Gelenk (22) einen entfernbaren Stift (23) umfasst, sodass durch Entfernen des Stifts (23) die Wirkverbindung zwischen der Abdeckung (13) und der Schrankdecke (4) aufhebbar ist.

12. Netzverteilerschrank (1) gemäss einem der vorangehenden Patentansprüche, **dadurch gekennzeichnet, dass** zwischen einem oberen und einem unteren Gehäusebereich (11, 12) eine Rohrbefestigungsplatte (24) angeordnet ist.

13. Netzverteilerschrank (1) gemäss einem der vorangehenden Patentansprüche, **dadurch gekennzeichnet, dass** mehrere entlang einer ringförmigen Kontur angeordnete Halteelemente (25) in einem Innenraum des Gehäuses (2) angebracht sind und mindestens eins der mehreren Halteelemente (25) derart verschiebbar ist, sodass der Umfang um die ringförmige Kontur variabel verstellbar ist.

14. Netzverteilerschrank (1) gemäss Patentanspruch 12 und 13, **dadurch gekennzeichnet, dass** die mehreren Halteelemente (25) in dem oberen Gehäusebereich (12) an der Rückwand (4) des Gehäuses (2) angeordnet sind.
